# EUROPEAN PATENT APPLICATION

(11) **EP 3 598 623 A1**
(43) Date of publication of application: **22.01.2020**
(21) Application number: 19174192.5
(22) Date of filing: 13.05.2019
(51) Int. Cl.: H02K 49/10, H02K 11/215, H02K 11/22, H02K 7/116

(54) **MAGNETIC REDUCTION DRIVE**

(30) Priority: 19.07.2018 JP 2018135979
(71) Applicant: Shinano Kenshi Co., Ltd., Ueda-shi, Nagano 386-0498 (JP)
(72) Inventor: UEHARA, Hiroshi, Nagano, 386-0498 (JP)
(74) Representative: Haseltine Lake Kempner LLP

(57) **Abstract**

A magnetic reduction device includes: a base portion; a rotor rotatably supported relative to the base portion, and supporting first permanent magnets having different polarities alternatively arranged in a circumferential direction; a magnet support portion supporting second permanent magnets having different polarities alternatively arranged in the circumferential direction, the second permanent magnet being arranged concentrically with the first permanent magnets; and a soft magnetic body support portion supporting soft magnetic bodies arranged between the first permanent magnets and the second permanent magnets along the circumferential direction, and being in non-contact with the rotor and the magnet support portion.

## Description

### [TECHNICAL FIELD]

The present invention relates to a magnetic reduction device.

### [BACKGROUND ART]

Patent Document 1 discloses a magnetic reduction device using magnetic force.

### [PRIOR ART DOCUMENT]

### [PATENT DOCUMENT]

[Patent Document 1] US. Patent No. 6794781

### [SUMMARY OF THE INVENTION]

### [PROBLEMS TO BE SOLVED BY THE INVENTION]

The magnetic reduction device in patent document 1 is increased in size in an axial direction. If it is attempted to provide, for example, a sensor or the like for detecting a torque in such a magnetic reduction device, the size might be further increased in the axial direction.

It is therefore desirable to provide a magnetic reduction gear in which an increase in size in an axial direction is suppressed.

### [MEANS FOR SOLVING THE PROBLEMS]

An embodiment of the present invention provides a magnetic reduction device including: a base portion; a rotor rotatably supported relative to the base portion, and supporting first permanent magnets having different polarities alternatively arranged in a circumferential direction; a magnet support portion supporting second permanent magnets having different polarities alternatively arranged in the circumferential direction, the second permanent magnets being arranged concentrically with the first permanent magnets; and a soft magnetic body support portion supporting soft magnetic bodies arranged between the first permanent magnets and the second permanent magnets along the circumferential direction, and being in non-contact with the rotor and the magnet support portion, wherein one of the magnet support portion and the soft magnetic body support portion is rotatable relative to the base portion, the other of the magnet support portion and the soft magnetic body support portion is non-rotatable relative to the base portion, and the magnetic reduction device comprises first and second sensors respectively facing the first and second permanent magnets at positions spaced radially outward from an axis of rotation of the rotor, and the first and second sensors for detecting a rotational phase difference between the rotor and the magnet support portion.

### [EFFECTS OF THE INVENTION]

According to an embodiment of the present invention, it is possible to provide a magnetic reduction gear in which an increase in size in an axial direction is suppressed.

### [BRIEF DESCRIPTION OF THE DRAWINGS]

FIG. 1 is a perspective view of a magnetic reduction device;
FIG. 2 is a front view of the magnetic reduction device;
FIG. 3 is a cross-sectional view taken along line A-A of FIG. 2;
FIG. 4 is a cross-sectional view taken along line B-B of FIG. 3;
FIG. 5 is an exploded perspective view of the magnetic reduction device;
FIGs. 6A and 6B are explanatory views of a relationship between leakage magnetic flux of a permanent magnet in a circumferential direction, and a rotational phase difference between a motor yoke and a low speed rotor; and
FIG. 7A is a schematic cross-sectional view illustrating a part of a magnetic reduction device according to a first variation, and FIG. 7B is a schematic cross-sectional view illustrating a part of a magnetic reduction device according to a second variation.

### [MODES FOR CARRYING OUT THE INVENTION]

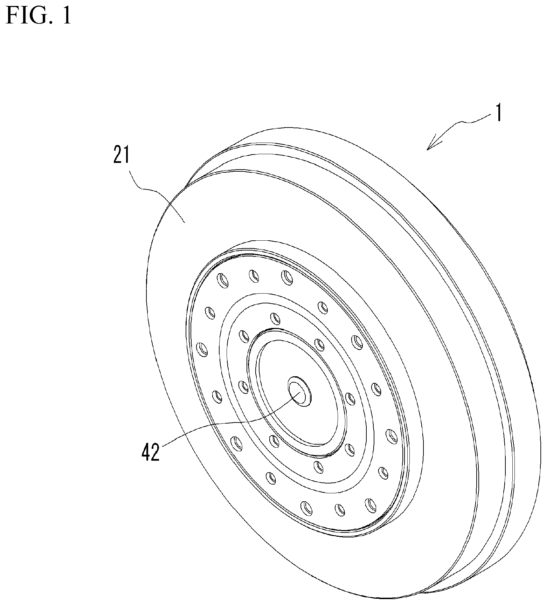

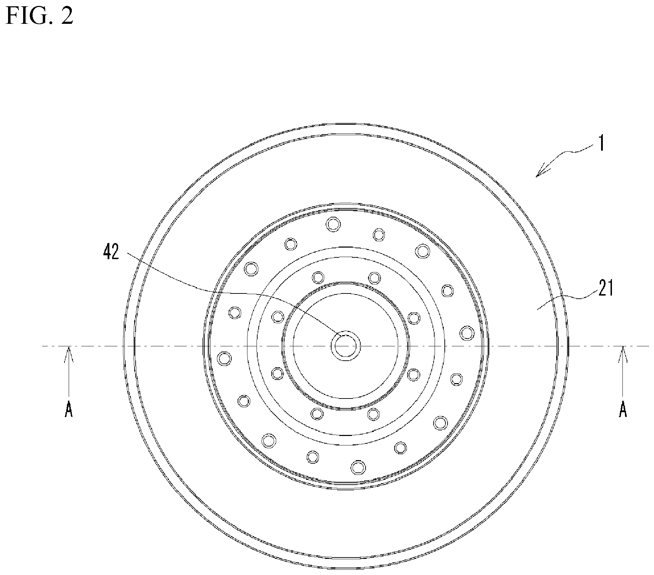

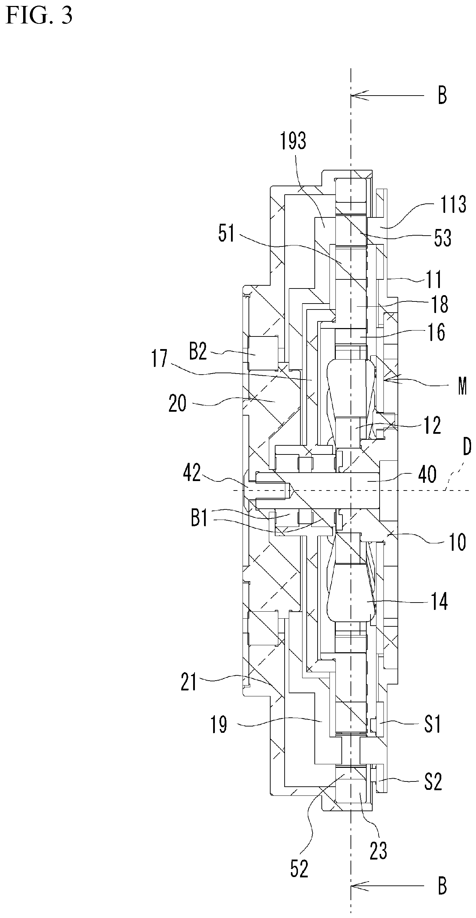

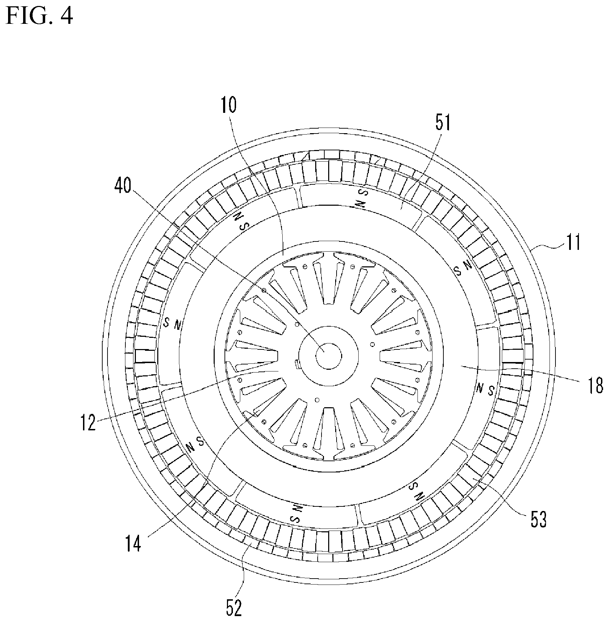

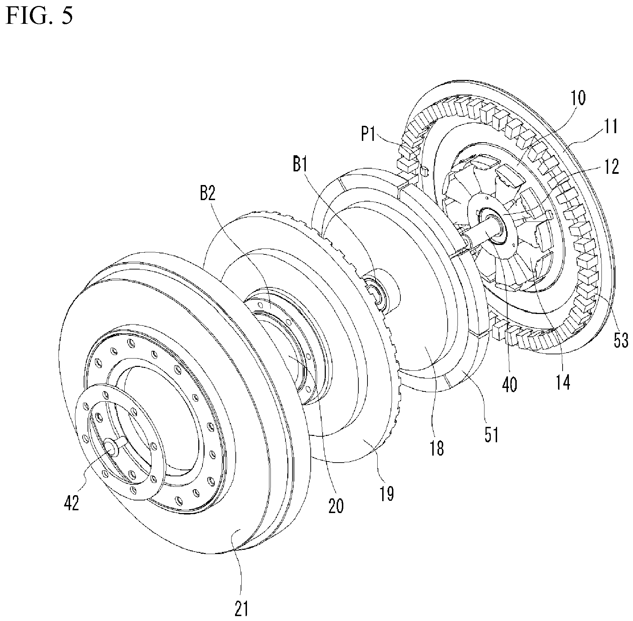

FIG. 1 is a perspective view of a magnetic reduction device 1. FIG. 2 is a front view of the magnetic reduction device 1. FIG. 3 is a cross-sectional view taken along A-A line of FIG 2. FIG. 4 is a cross-sectional view taken along B-B line of FIG. 3. FIG. 5 is an exploded perspective view of the magnetic reduction device 1. As illustrated in FIG. 3 and the like, the magnetic reduction device 1 is formed into a flat shape such that the thickness in a direction of a central axis D of a shaft member 40 is smaller than the length of the diameter orthogonal to the central axis D. The magnetic reduction device 1 includes a base portion 10, a lower support portion 11, a motor M, an upper support portion 19, an upper fixed portion 20, a low speed rotor 21, permanent magnets 51 and 52, soft magnetic bodies 53, and the like. The base portion 10, the lower support portion 11, a motor rotor 17, the upper support portion 19, the upper fixed portion 20, and the shaft member 40 are made of, for example, synthetic resin.

As illustrated in FIG. 3, the base portion 10 holds a proximal end side of the shaft member 40 for non-rotatation. On a distal end side of the shaft member 40, the upper fixed portion 20 is non-rotatably fixed by a screw 42. The motor M includes a stator 12, coils 14, a motor magnet 16, the motor rotor 17, and a motor yoke 18. The stator 12 is non-rotatably held by the base portion 10 around the shaft member 40. The coils 14 are respectively wound around teeth of the stator 12 via insulators.

The motor rotor 17 is rotatably held by the shaft member 40 via two bearings B1, and is rotatable about the central axis D. As compared with the stator 12, the motor rotor 17 is provided close to the distal end of the shaft member 40. The shape of the motor rotor 17 is flat and substantially cylindrical. The motor yoke 18 having a substantially annular shape is fitted and held onto and by an inner circumferential surface of the motor rotor 17. The motor yoke 18 projects radially outward from the motor rotor 17. The motor magnets 16 are fixed to the inner circumferential surface of the motor yoke 18 and arranged in a circumferential direction so as to face the teeth of the stator 12. The permanent magnets 51, which will be described later in detail, are fixed to an outer circumferential surface of a portion of the motor yoke 18 projecting radially outward from the motor rotor 17. The control of the energization states of the coils 14 generates magnetic attractive force and magnetic repulsive force between the stator 12 and the motor magnets 16, which rotates the motor yoke 18 located radially outward from the stator 12. That is, the motor M is an outer rotor type. When the motor yoke 18 rotates, the permanent magnets 51 also rotate. The motor rotor 17 and the motor yoke 18 are an example of a rotor.

As illustrated in FIG. 3, the lower support portion 11 having a thin and substantially annular shape is fixed to an outer circumferential edge of the base portion 10. On the outer circumferential edge side of the lower support portion 11, a projecting portion 113, which supports the soft magnetic bodies 53 and projects to the distal end side of the shaft member 40 in the direction of the central axis D, is formed. The upper support portion 19 is non-rotatably fixed to the upper fixed portion 20. The upper support portion 19 is provided in non-contact with the motor rotor 17, the motor yoke 18, and the permanent magnet 51. As compared with the motor yoke 18, the upper support portion 19 is provided close to the distal end of the shaft member 40. The upper support portion 19 has a flat and substantially cylindrical shape whose diameter increases toward the base portion 10 and the lower support portion 11 so as to surround the motor yoke 18. On the outer circumferential edge side of the upper support portion 19, a projecting portion 193, which supports the soft magnetic bodies 53 and projects toward the root side of the shaft member 40 in the direction of the central axis D, is formed. The soft magnetic body 53 is sandwiched by the projecting portions 113 and 193 in the direction of the central axis D. The lower support portion 11 and the upper support portion 19 are examples of a soft magnetic body support portion. The soft magnetic bodies 53 radially face the permanent magnets 51 via a predetermined clearance. The soft magnetic body 53 will be described later in detail. Further, the lower support portion 11 holds a sensor Sb1 facing the permanent magnet 51 in the direction of the axis D.

As illustrated in FIG. 3, the low speed rotor 21 is rotatably held about the axis D by the upper fixed portion 20 via a bearing B2. As compared with the upper support portion 19, the low speed rotor 21 is provided close to the distal end of the shaft member 40, and has a substantially cylindrical shape covering the outer circumference of the upper support portion 19. The low speed rotor 21 is provided in non-contact with the upper support portion 19. An outer yoke 23 having a ring shape is fixed to the inner circumferential surface of the low speed rotor 21. The permanent magnets 52 are fixed to the inner circumferential surface of the outer yoke 23. That is, the low speed rotor 21 supports the permanent magnets 52 via the outer yoke 23. The low speed rotor 21 is an example of a magnet support portion. The permanent magnets 52 face the soft magnetic bodies 53 via a predetermined clearance in the radial direction. Also, the lower support portion 11 holds a sensor S2 facing the permanent magnet 52 in the direction of the axis D. The sensors S1 and S2 are arranged in the radial direction, in other words, disposed on a line passing through the axis D and orthogonal thereto.

As illustrated in FIG. 4, the permanent magnets 51, the permanent magnets 52, and the soft magnetic bodies 53 are arranged concentrically with one another. Additionally, the soft magnetic bodies 53 are disposed between the permanent magnets 51 and 52 in non-contact therewith. The soft magnetic body 53 modulates the magnetic flux of the permanent magnet 51 and the magnetic flux of the permanent magnet 52, and is, for example, an electromagnetic steel sheet. The permanent magnets 51 are arranged such that S poles and N poles are alternately arranged in the circumferential direction. That is, in one of the permanent magnets 51 adjacent to the other permanent magnet 51 in which the S pole is magnetized radially outward and the N pole is magnetized radially inward, the N pole is magnetized radially outward and the S pole is magnetized radially inward. This configuration applies to the permanent magnet 52. The permanent magnet 51 is formed longer in the circumferential direction than each of the permanent magnet 52 and the soft magnetic body 53. The number of the permanent magnets 51 is smaller than each of the number of the permanent magnets 52 and the number of the soft magnetic bodies 53. The permanent magnets 51 are arranged at substantially equal angular intervals. Likewise, the soft magnetic bodies 53 are arranged at substantially equal angular intervals. The permanent magnets 52 are arranged in the circumferential direction without substantially having a gap. Additionally, instead of the permanent magnets 51 arranged in the circumferential direction, a single annular permanent magnet may be provided. The annular permanent magnet may be magnetized so that the S poles and the N poles are alternately arranged in the circumferential direction. This configuration applies to the permanent magnets 52.

As described above, when the motor yoke 18 rotates and the permanent magnet 51 rotates, each magnetic flux of the permanent magnets 51 and 52 modulated by the soft magnetic body 53 changes, and the magnetic force exerting between the permanent magnets 51 and 52 causes the low speed rotor 21 to rotate slower than the motor yoke 18. In this manner, the rotational input from the motor M is reduced and output. That is, the motor yoke 18 serves as a high speed rotor. Further, the rotation of the motor yoke 18 is transmitted to the low speed rotor 21 in a non-contact manner by the magnetic force, thereby suppressing vibration and driving noise, eliminating lubrication, and improving maintenance. Furthermore, it is easy to change the reduction ratio, the rotational torque of the low speed rotor 21, and the like, by appropriately changing each number, each size, each position, and the like of the permanent magnets 51, the permanent magnets 52, and the soft magnetic bodies 53.

Next, the sensors S1 and S2 will be described. As illustrated in FIG. 3, the sensor S1 has a small circuit board and a Hall element mounted on the circuit board. The same configuration applies to the sensor S2. The sensors S1 and S2 output detection values corresponding to the leakage magnetic flux of the permanent magnets 51 and 52, respectively. The sensors S1 and S2 are connected to a circuit board not illustrated, and a detection circuit formed on the circuit board detects a rotational phase difference between the motor yoke 18 and the low speed rotor 21 on the basis of the output values of the sensors S1 and S2. The rotational torque of the low speed rotor 21 is calculated from this rotational phase difference. On the basis of the calculated torque, it is possible to, for example, control the drive of the motor M or execute a process for notifying a warning.

As illustrated in FIG. 3, the sensors S1 and S2 are located radially away from the shaft member 40, and respectively face directly the permanent magnets 51 and 52 in the direction of the axis D. In other words, the sensors S1 and S2 are provided in the magnetic reduction device 1 and within the thickness thereof in the direction of the axis D. For example, in a case where a device for calculating the rotational torque of the low speed rotor 21 is provided outside the magnetic reduction device 1 at the distal end of the shaft member 40, the entire size of this device increases in the direction of the axis D. In the present embodiment, the provision of the sensors S1 and S2 at the above-described positions suppresses an increase in size of the magnetic reduction device 1 in the direction of the axis D.

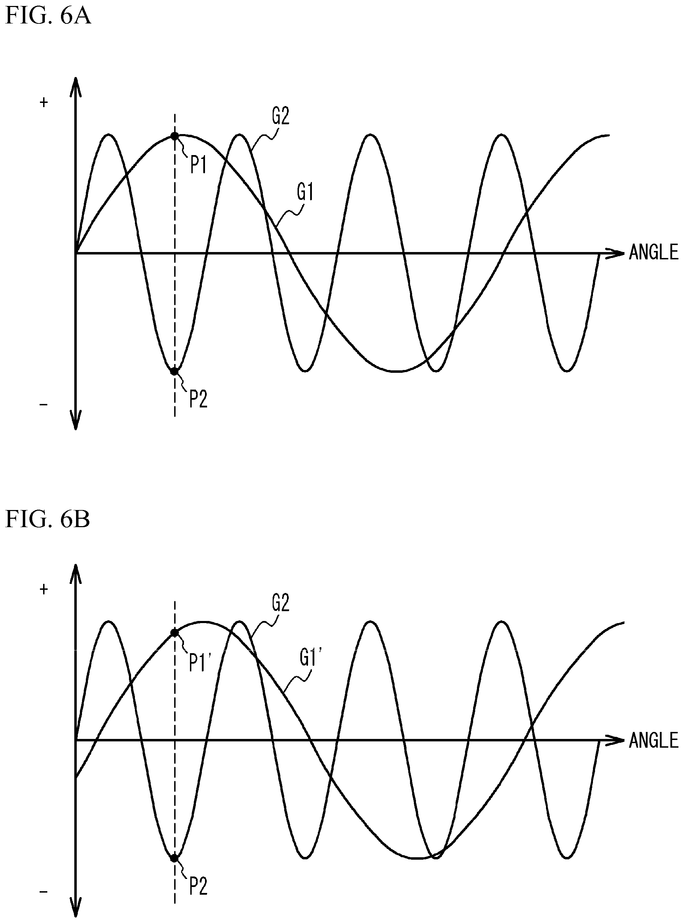

Next, a description will be given of the relationship between the leakage magnetic flux of the permanent magnets 51 and 52 in the circumferential direction and the rotational phase difference between the motor yoke 18 and the low speed rotor 21. FIGs. 6A and 6B are explanatory views of the relationship between the leakage magnetic flux of the permanent magnets 51 and 52 in the circumferential direction and the rotational phase difference between the motor yoke 18 and the low speed rotor 21. FIGs. 6A and 6B illustrate a change in each magnetic flux of the permanent magnets 51 and 52 in the circumferential direction. Additionally, FIGs. 6A and 6B are simplified for understanding, and intensity and wavelength of the leakage magnetic flux of the permanent magnets 51 and 52 illustrated therein are different from reality. In FIGs. 6A and 6B, horizontal axes indicate an angular position in the circumferential direction, and vertical axes indicates the intensity of the magnetic flux. The positive peak value of the magnetic flux indicates the central position of one of the S pole and the N pole, and the negative peak value of the magnetic flux indicates the central position of the other. Curves G1 and G2 illustrated in FIG. 6A are simplified based on the measurement results of the leakage magnetic flux of permanent magnets 51 and 52 by the sensors S1 and S2, respectively. FIG. 6A illustrates a state where the motor yoke 18 and the low speed rotor 21 do not rotate with no external force applied thereto. FIG. 6B illustrates a state in which the motor yoke 18 slightly rotates from the state illustrated in FIG. 6A. The curve G1' of FIG. 6B illustrates the intensity of the leakage magnetic flux after the curve G1 of FIG. 6A.

For example, as illustrated in FIG. 6A, it is assumed that the intensity of the magnetic flux detected by the sensors S1 and S2 respectively indicate values P1 and P2. In a memory or the like constituting the detection circuit, the rotational torque of the low speed rotor 21 and the motor yoke 18 corresponding to the difference between the intensity of the magnetic flux detected by the sensors S1 and S2 is stored as data in advance. The rotational torque is experimentally obtained and stored as data in the memory or the like. Therefore, in the example of FIG. 6A, the rotational torque of the low speed rotor 21 and the motor yoke 18 is calculated as zero on the basis of the difference between the values P1 and P2. In FIG. 6B, it is assumed that the intensity of the magnetic flux detected by the sensors S1 and S2 indicates values P1' and P2. With reference to the above-described data, the rotational torque of the low speed rotor 21 and the motor yoke 18 is calculated based on the difference between the values P1' and P2. In such a way, the intensity difference between the leakage magnetic flux of the permanent magnets 51 and 52 is synonymous with the rotational phase difference between the motor yoke 18 and the low speed rotor 21, and the rotational torque of the low speed rotor 21 is calculated based on the rotational phase difference.

In the present embodiment, the sensors S1 and S2 are arranged in the radial direction, but not limited thereto. The sensors S1 and S2 may be spaced away from each other in the radial direction with a predetermined angular difference in the circumferential direction. Further, although a pair of the sensors S1 and S2 is provided in the present embodiment, plural sets of such sensors may be provided.

In the present embodiment, the sensors S1 and S2 are used to detect the rotational phase difference between the motor yoke 18 and the low speed rotor 21, but not limited thereto. For example, the motor yoke 18 may be provided with a magnet for position detection for detecting the origin of the rotational position of the motor yoke 18, and a hall sensor for detecting the intensity of the magnetic flux of this magnet may be provided in the lower support portion 11. Likewise, the low speed rotor 21 may be provided with a magnet for position detection for detecting the origin of the rotational position of the low speed rotor 21, and a hall sensor for detecting the intensity of the magnetic flux of this magnet may be provided in the lower support portion 11. Also in this case, in a memory or the like constituting the detection circuit, the rotational torque of the low speed rotor 21 and the motor yoke 18 according to the relative position between the low speed rotor 21 and the motor yoke 18 may be stored in advance as data. It is therefore possible to detect the rotational phase difference between the motor yoke 18 and the low speed rotor 21 based on these hall sensors, and the rotational torque of the low speed rotor 21 may be calculated based on this rotational phase difference. Moreover, instead of one of the sensors S1 and S2 described above, a magnet and a hall sensor for position detection may be used.

Also, an FG sensor may be used instead of the sensor S1. The FG sensor includes: an FG magnet with which the motor yoke 18 rotates together; and a substrate provided with an FG pattern facing the FG magnet and generating an induced electromotive force in response to the rotation of the FG magnet. Likewise, an FG sensor may be used instead of the sensor S2. In this case, the FG sensor includes: an FG magnet with which the low speed rotor 21 rotates together; and a substrate provided with an FG pattern facing the FG magnet and generating an induced electromotive force in response to the rotation of the FG magnet. It is possible to detect the rotational phase difference between the motor yoke 18 and the low speed rotor 21 on the basis of the induced electromotive force generated by these FG patterns, and the rotational torque of the low speed rotor 21 may be calculated based on this rotational phase difference. Further, the permanent magnet 51 may be used as an FG magnet for the motor yoke 18. The permanent magnet 52 may be used as an FG magnet for the low speed rotor 21. Furthermore, an FG sensor may be used instead of one of the sensors S1 and S2 described above.

Further, instead of the sensors S1 and S2, the rotational phase difference of the low speed rotor 21 may be detected not by magnetic flux but by an optical method. For example, an optically detectable index for detecting the origin of the rotational position of the motor yoke 18 may be provided in the motor yoke 18 by for example, ink or a laser marker, and an optical sensor for detecting this index may be provided in the lower support portion 11. Likewise, the low speed rotor 21 may be provided with an optically detectable index for detecting the origin of the rotational position of the low speed rotor 21, and an optical sensor for detecting this index may be provided in the lower support portion 11. It is possible to detect the rotational phase difference between the motor yoke 18 and the low speed rotor 21 based on these optical sensors, and the rotational torque of the low speed rotor 21 may be calculated based on this rotational phase difference. Additionally, the optical sensor includes, for example, a light emitting element emitting light toward the index, and a light receiving element receiving the light reflected by the index. Also, instead of one of the sensors S1 and S2 described above, the index and the optical sensor described above may be used.

In the present embodiment, the base portion 10 supporting the shaft member 40 is separately formed from the lower support portion 11 supporting the soft magnetic bodies 53, but not limited thereto. They may be integrally formed. The upper fixed portion 20 and the upper support portion 19 are separately formed from each other, but may be integrally formed. Further, in a case where the soft magnetic bodies 53 are held only by the lower support portion 11 by adhesion or fitting, the upper support portion 19 may not be provided. The low speed rotor 21 is rotatably supported with respect to the upper fixed portion 20 via the bearing B1, but may be rotatably supported by the shaft member 40 via the bearing without providing the upper fixed portion 20.

In this embodiment, the lower support portion 11 and the upper support portion 19 are not rotatable relative to the base portion 10, and the low speed rotor 21 is roratable relative to the base portion 10, but not limited thereto. For example, the lower support portion 11 and the upper support portion 19 may be rotatable relative to the base portion 10, and the low speed rotor 21 may not be rotatable relative to the base portion 10. In this case, the lower support portion 11 and the upper support portion 19 actually serve as a low speed rotor. Specifically, unlike the present embodiment described above, the low speed rotor 21 may be non-rotatably fixed to the upper fixed portion 20, the lower support portion 11 may be rotatable relative to the base portion 10 via a bearing, and the upper support portion 19 may be rotatable relative to the upper fixed portion 20 via a bearing. In this case, one of the lower support portion 11 and the upper support portion 19 that supports the soft magnetic bodies 53 is provided with the sensors S1 and S2 that respectively face permanent magnets 51b and 52b in the direction of the axis D. In this case, the sensors S1 and S2 as well as the lower support portion 11 and the upper support portion 19 rotate relative to the base portion 10. In this case, on the basis of the detection results of the sensors S1 and S2, it is possible to calculate the rotational torque of the lower support portion 11 and the upper support portion 19 indirectly serving as the low speed rotor. Further, in this case, when the above-described optical sensor is used instead of the sensors S1 and S2, the lower support portion 11 may be provided with the optical sensor.

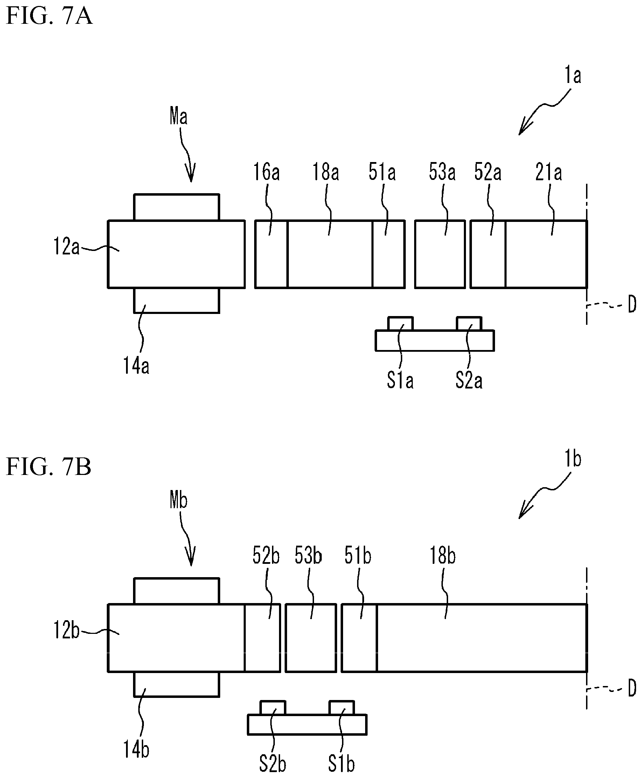

Next, a description will be given of variations using an inner rotor type motor. Additionally, components similar to those of the described-above present embodiment are denoted by similar numerical references, and duplicated explanation is omitted. FIG. 7A is a schematic cross-sectional view illustrating a part of a magnetic reduction device 1a according to a first variation. An inner rotor type motor Ma of the magnetic reduction device 1a includes a stator 12a, coils 14a, motor magnets 16a, and a motor yoke 18a. The coils 14a are wound around the stator 12a. The stator 12a is non-rotatably fixed to a base portion not illustrated. The motor yoke 18a having a ring shape is rotatably supported by the base portion not illustrated. The motor yoke 18a is disposed radially inward from the stator 12a. The motor magnets 16a are disposed on the outer circumferential surface of the motor yoke 18a. By exciting the stator 12a in response to the energized state of the coils 14a, the motor yoke 18a rotates in response to the magnetic attractive force and the magnetic repulsive force generated between the stator 12a and the motor magnets 16a. That is, the motor yoke 18a serves as a high speed rotor.

The permanent magnets 51a are disposed on the inner circumferential surface of the motor yoke 18a such that different polarities are alternately arranged in the circumferential direction. Therefore, when the motor yoke 18a rotates, the permanent magnets 51a also rotate. Like the present embodiment described above, the soft magnetic body 53a is non-rotatably fixed to the base portion. A low speed rotor 21a has a thin and substantially disk shape. The low speed rotor 21a is disposed radially inward from the motor yoke 18a. The permanent magnets 52a are disposed on the outer circumferential surface of the low speed rotor 21a such that different polarities are alternately arranged in the circumferential direction. Therefore, when the low speed rotor 21a rotates, the soft magnetic bodies 53a also rotate. Further, when the motor yoke 18a rotates, the low speed rotor 21a rotates slower than the motor yoke 18a in accordance with the magnetic force acting between the permanent magnets 51a and 52a via the soft magnetic bodies 53a.

The sensors S1a and S2a respectively face the permanent magnets 51a and 52a in the direction of the central axis D, and respectively detect the leakage magnetic flux of the permanent magnets 51a and 52a. In the same manner as the present embodiment described above, the sensors S1a and S2a are fixed to the base portion. Thus, the rotational phase difference between the motor yoke 18a and the low speed rotor 21a is detected by the sensors S1a and S2a, and the rotational torque of the low speed rotor 21a is calculated based the rotational phase difference. Also in the first variation, the sensors S1a and S2a are disposed to respectively face the permanent magnets 51a and 52a, thereby suppressing an increase in size of the magnetic reduction device 1a in the direction of the axis D.

FIG. 7B is a schematic cross-sectional view illustrating a part of a magnetic reduction device 1b according to a second variation. A motor Mb of the magnetic reduction device 1b includes a stator 12b, coils 14b, and a motor yoke 18b. The coils 14b are wound around the stator 12b. The stator 12b is non-rotatably fixed to a base portion not illustrated. Permanent magnets 52b are disposed on the inner circumferential surface of the stator 12b such that different polarities are alternately arranged in the circumferential direction. The motor yoke 18b has a thin and substantially disk shape and is rotatably supported by the base portion not illustrated. The motor yoke 18b is disposed radially inward from the stator 12b. The permanent magnets 51b are arranged on the outer circumferential surface of the motor yoke 18b such that different polarities are alternately arranged in the circumferential direction. The soft magnetic bodies 53b are disposed between the permanent magnets 51b and 52b. The soft magnetic bodies 53b are supported by a support portion not illustrated, and the support portion is rotatably supported by the base portion. That is, in the second variation, the stator 12b and the permanent magnet 52b are non-roratable relative to the base portion, the motor yoke 18b and the permanent magnet 51b rotate relative to the base portion, and the soft magnetic bodies 53b rotates relative to the base portion. Herein, the stator 12b is excited by controlling the energization states of the coils 14b, and the motor yoke 18b rotates in accordance with the magnetic attractive force and the magnetic repulsive force generated between the stator 12b and the permanent magnets 51b. That is, the motor yoke 18b serves as a high speed rotor, and the permanent magnets 51b are also used as a magnet for the rotor. When the permanent magnets 51b rotate together with the motor yoke 18b, the soft magnetic bodies 53b rotate. That is, the support portion supporting the soft magnetic bodies 53b serve as a low speed rotor.

The sensors S1b and S2b respectively face the permanent magnets 51b and 52b in the direction of the axis D, and detect the leakage magnetic flux of the permanent magnets 51b and 52b. The sensors S1b and S2b rotate in synchronization with the soft magnetic bodies 53b. That is, the sensors S1b and S2b are fixed to the soft magnetic body supporting portion which is a member for supporting the soft magnetic bodies 53b so as to respectively face the permanent magnets 51b and 52b in the direction of the axis D. The sensors S1b and S2b rotate together with the soft magnetic bodies 53b. Thus, the rotational phase difference between the motor yoke 18b and the stator 12b is detected by the sensors S1b and S2b, and the rotational torque of the soft magnetic body supporting portion serving as a low speed rotor is indirectly calculated based on the rotational phase difference. Also in the second variation, the sensors S1b and S2b are arranged to respectively face the permanent magnets 51b and 52b, thereby suppressing an increase in size of the magnetic reduction device 1b in the direction of the axis D.

Also in the first and second variations, the rotational torque of the low speed rotor may be detected by use of a hall sensor, an FG sensor, or an optical method.

The motor is incorporated into the magnetic reduction device in the present embodiment and the variations described above, but not limited thereto. The motor may be separately provided from the magnetic reduction device. That is, the motor may be provided outside the magnetic reduction device, and the rotor provided in the magnetic reduction device may be rotated by the motor through some kind of driving power transmission means. In this case, the rotor of the motor and the rotor of the magnetic reduction device are separately provided.

In the present embodiment and the variations described above, the leakage magnetic flux includes: magnetic flux that contributes to the rotation of the motor yoke in accordance with the magnetic attractive force and the magnetic repulsive force generated between the stator and the permanent magnets; and the magnetic flux that does not contribute to such rotation.

While the exemplary embodiments of the present invention have been illustrated in detail, the present invention is not limited to the above-mentioned embodiments, and other embodiments, variations and variations may be made without departing from the scope of the present invention.

## Claims

1. A magnetic reduction device (1, 1a, 1b) comprising:
a base portion (10);
a rotor (17, 18a, 18b) rotatably supported relative to the base portion (10), and supporting first permanent magnets (51, 51a, 51b) having different polarities alternatively arranged in a circumferential direction;
a magnet support portion (21, 21a, 12b) supporting second permanent magnets (52, 52a, 52b) having different polarities alternatively arranged in the circumferential direction, the second permanent magnets (52, 52a, 52b) being arranged concentrically with the first permanent magnets (51, 51a, 51b); and
a soft magnetic body support portion (11, 19) supporting soft magnetic bodies (53, 53a, 53b) arranged between the first permanent magnets (51, 51a, 51b) and the second permanent magnets (52, 52a, 52b) along the circumferential direction, and being in non-contact with the rotor (17, 18a, 18b) and the magnet support portion (21, 21a, 12b),
wherein
one of the magnet support portion (21, 21a, 12b) and the soft magnetic body support portion (11, 19) is rotatable relative to the base portion (10),
the other of the magnet support portion (21, 21a, 12b) and the soft magnetic body support portion (11, 19) is non-rotatable relative to the base portion (10), and
the magnetic reduction device (1, 1a, 1b) comprises first and second sensors (S1, S2) respectively facing the first and second permanent magnets (52, 52a, 52b) at positions spaced radially outward from an axis of rotation of the rotor (17, 18a, 18b), and the first and second sensors (S1, S2) for detecting a rotational phase difference between the rotor (17, 18a, 18b) and the magnet support portion (21, 21a, 12b).

2. The magnetic reduction device (1, 1a, 1b) according to claim 1, wherein the first and second sensors (S1, S2) are magnetic sensors that respectively detect leakage magnetic flux of the first and second permanent magnets (51, 51a, 51b, 52, 52a, 52b).

3. The magnetic reduction device (1, 1a, 1b) according to claim 1, wherein the first and second sensors (S1, S2) are FG sensors including FG patterns in which an induced voltage is generated in accordance with rotation of the rotor (17, 18a, 18b) or the magnet support portion (21, 21a, 12b).

4. The magnetic reduction device (1, 1a, 1b) according to claim 1, wherein the first and second sensors (S1, S2) are optical sensors that detect an optical index provided in the rotor (17, 18a, 18b) or the magnet support.

5. The magnetic reduction device (1, 1a, 1b) according to any one of claims 1 to 4, further comprising a motor (M) rotating the rotor (17, 18a, 18b).
